(19) Europäisches Patentamt
European Patent Office
Office européen des brevets

(11) **EP 1 617 586 B1**

(12) **FASCICULE DE BREVET EUROPEEN**

(45) Date de publication et mention
de la délivrance du brevet:
**03.09.2008 Bulletin 2008/36**

(51) Int Cl.:
***H04L 9/18*** (2006.01)

(21) Numéro de dépôt: **05106111.7**

(22) Date de dépôt: **05.07.2005**

(54) **Chiffrement en continu du contenu d'une mémoire externe à un processeur**

Stromverschlüsselung des Inhalts eines Speichers, welcher ausserhalb eines Prozessors angeordnet ist

Stream ciphering of the content of a memory which is external to a processor

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **06.07.2004 FR 0451459**

(43) Date de publication de la demande:
**18.01.2006 Bulletin 2006/03**

(73) Titulaires:
• **PROTON WORLD INTERNATIONAL N.V.**
**1930 ZAVENTEM (BE)**
• **ST MICROELECTRONICS S.A.**
**92120 Montrouge (FR)**

(72) Inventeurs:
• **Daemen, Joan**
**3900, OVERPELT (BE)**

• **Guillemin, Pierre**
**13002, MARSEILLE (FR)**
• **Anguille, Claude**
**13320, BANC BEL AIR (FR)**
• **Baedouillet, Michel**
**13790, ROUSSET (FR)**
• **Liardet, Pierre-Yvan**
**13790, PEYNIER (FR)**
• **Teglia, Yannick**
**13011, MARSEILLE (FR)**

(74) Mandataire: **de Beaumont, Michel et al**
**1bis, rue Champollion**
**38000 Grenoble (FR)**

(56) Documents cités:
**EP-A- 0 908 810          GB-A- 2 353 191**
**US-A1- 2002 044 651          US-A1- 2003 198 344**

## Description

La présente invention concerne de façon générale le chiffrement ou cryptage de données, de programme ou plus généralement de codes numériques devant être stockés dans une ou plusieurs mémoires, externes à un processeur intégré chargé d'exploiter ces codes.

Un exemple d'application de la présente invention concerne le chiffrement de programmes exécutables téléchargés par un dispositif (ordinateur, lecteur de données vidéo ou audio, appareil pourvu d'un microprocesseur d'exécution de programmables téléchargeables, etc.) dans lequel ces programmes doivent être stockés. Le téléchargement peut, par exemple, faire appel à l'Internet. Plus précisément, la présente invention concerne les programmes ou données pour lesquels on souhaite empêcher qu'un utilisateur non autorisé y accède de façon exploitable.

On fera par la suite référence au terme "données" pour désigner indifféremment n'importe quel code numérique qu'il s'agisse de programmes exécutables, ou de données traitées par ces programmes.

Par externe au processeur intégré, on entend selon l'invention externe à une zone dite sécurisée à l'intérieur de laquelle se trouve une unité centrale de traitement communiquant avec l'extérieur de cette zone sécurisée par un ou plusieurs bus. La mémoire est alors connectée à ce ou ces bus et est donc externe au processeur intégré.

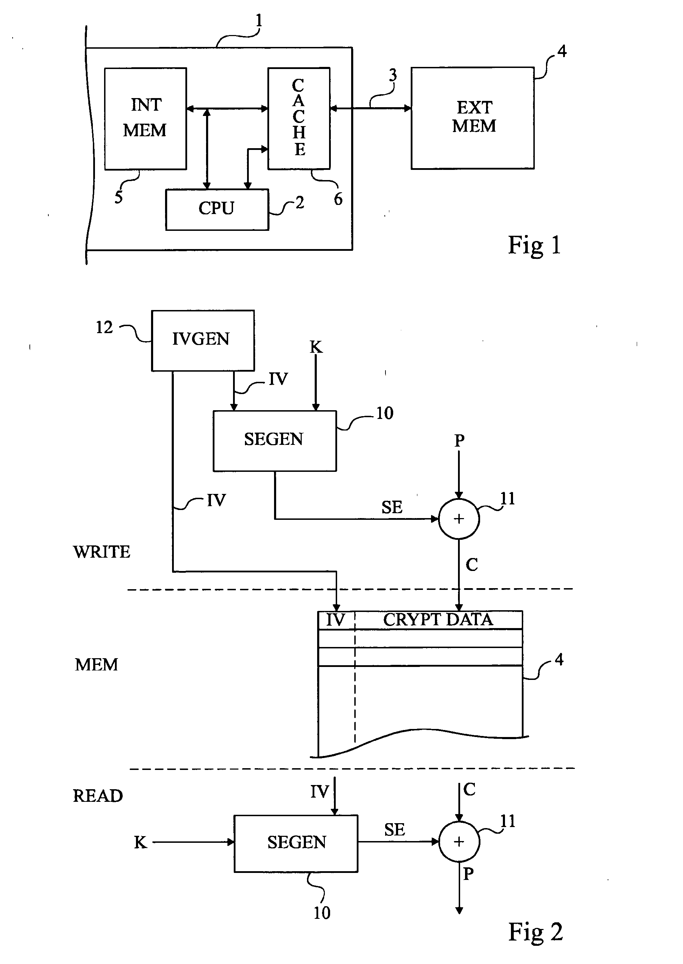

La figure 1 illustre, de façon partielle et très schématique, la structure d'un système à microprocesseur et à mémoire externe auquel s'applique la présente invention. On définit une zone 1 dite sécurisée à l'intérieur de laquelle se trouve une unité centrale de traitement 2 (CPU) communiquant par l'intermédiaire d'un ou plusieurs bus 3 avec une mémoire externe 4 (EXT MEM). La mémoire 4 est généralement une mémoire à accès non séquentiel (aléatoire ou non). La zone 1 est, par exemple, le microprocesseur intégré ou, plus généralement, un ou plusieurs circuits intégrés de traitement de données définissant une zone à l'intérieur de laquelle on considère que les données traitées ne sont pas susceptibles d'être piratées. En pratique, la zone sécurisée 1 est le plus souvent constituée par une unique puce de circuit intégré, la mémoire externe 4 étant une autre puce. Le processeur 2 est associé, dans la zone sécurisée, à une mémoire interne 5 (INT MEM) considérée également comme sûre et exploite une mémoire cache 6 (CACHE) servant d'interface d'entrée-sortie avec le bus 3.

Le chiffrement auquel s'applique la présente invention concerne celui de toutes données transitant sur le ou les bus 3, entre la mémoire 4 et l'unité centrale 2 ou plus généralement la zone 1. Ce chiffrement consiste à coder les données stockées au moyen d'une clé connue par le processeur intégré. Par exemple, cette clé lui est transmise par un processus de chiffrement symétrique ou asymétrique depuis un système distant fournissant le programme, de façon à ce que le processeur la stocke dans une zone interne protégée (par exemple, la mémoire 5), et l'utilise pour décrypter le programme téléchargé et/ou pour chiffrer les données en mémoire externe.

La présente invention concerne plus particulièrement le cas de données qui, lorsqu'elles sont stockées dans la mémoire externe, sont chiffrées au moyen d'une clé qui dépend du circuit intégré et qui se trouve être différente d'une puce à une autre, le cas échéant après personnalisation. Par contre, le chiffrement est indépendant des données elles-mêmes en ce sens qu'il n'est pas nécessaire de connaître les données précédentes ou suivantes de celles en cours de chiffrement pour être capable d'effectuer ce chiffrement.

Un exemple de solution connue pour chiffrer le contenu d'une mémoire externe à un processeur est décrit dans la demande américaine n° US-A-2003-0198344. Cette solution consiste à découper les données par blocs et à chiffrer en continu chaque bloc de données au moyen d'une séquence combinant une clé propre au circuit intégré et un vecteur d'initialisation changeant à chaque bloc de données.

La figure 2 illustre, de façon très schématique et sous forme de blocs, une telle solution. Cette solution est basée sur l'utilisation d'un générateur 10 pseudo aléatoire (SEGEN) fournissant une séquence SE de chiffrement d'un bloc de données P au moyen d'une porte 11 de type OU-Exclusif. La porte 11 fournit un résultat chiffré C, c'est-à-dire un bloc P chiffré au moyen de la séquence SE. La séquence SE fournie par le générateur 10 est basée sur une clé interne K correspondant à une clé propre au microprocesseur et sur un vecteur d'initialisation IV fourni par un générateur 12 (IVGEN). Le générateur 10 est pseudo aléatoire en ce sens que, pour une clé K donnée, il fournit toujours la même séquence SE pour un même vecteur IV d'initialisation. Les grandeurs K et IV sont exploitées par un algorithme de génération de nombres pseudo aléatoires (bloc 10) et sont des mots binaires dont les tailles dépendent de la sécurité souhaitée en terme de nombres de combinaisons possibles. La séquence SE est un mot binaire dont la taille dépend de la taille des blocs à chiffrer. Le flux de blocs C de données est stocké dans la mémoire 4 (MEM). Le vecteur d'initialisation IV généré par le générateur 12 est stocké dans la mémoire 4 en même temps que le bloc crypté C (CRYPT DATA) issu de la porte 11, de façon à pouvoir associer, à chaque bloc stocké, un vecteur d'initialisation qui lui est propre. Ce qui a été décrit ci-dessus correspond à une phase d'écriture (partie haute de la figure 2, WRITE) dans la mémoire 4 (MEM).

Pour déchiffrer (partie basse de la figure 2, READ) des données lues dans la mémoire 4, on fait appel à un générateur pseudo aléatoire 10 de séquences SE identique et à une porte OU-Exclusif 11 identique. Le générateur 10 reçoit d'une part la clé K interne au circuit intégré (processeur) et d'autre part le vecteur d'initialisation IV correspondant au bloc C à déchiffrer, lu dans la mémoire 4.

Une solution telle qu'illustrée par la figure 2 correspond à une solution décrite dans la demande américaine susmentionnée et permet que les données soient chiffrées par une clé propre à la puce de circuit intégré les traitant.

Un premier problème des solutions classiques du type de celle décrite dans cette demande de brevet est lié à la nécessité de stocker les vecteurs d'initialisation. Un tel stockage prend de la place (qu'il soit stocké en externe ou en interne au circuit 1).

Un autre problème est lié au risque dit de collision par la méthode utilisée pour générer les vecteurs d'initialisation IV du générateur de séquences SE. En effet, la probabilité de se trouver en présence de deux vecteurs d'initialisation identiques est fonction de la taille du mot IV généré par le générateur 12. Toutefois, augmenter la longueur de la séquence aléatoire accroît le coût du circuit. En fait, pour un même algorithme de chiffrement (bloc 10), la sécurité du chiffrement repose alors sur la taille du vecteur d'initialisation.

L'invention s'applique plus particulièrement à un chiffrement en continu (stream cipher), c'est-à-dire du type illustré par la figure 2 dans lequel on génère une séquence de chiffrement (SE) indépendante des données pour masquer celles-ci par une combinaison (généralement un OU-Exclusif).

On aurait pu penser remplacer le générateur aléatoire (12, figure 2) du vecteur d'initialisation par une génération dite en mode compteur qui consiste à générer le vecteur d'initialisation au moyen d'un compteur. Une telle génération permet de repousser la probabilité de collision. Par exemple, avec un générateur aléatoire sur 32 bits, la probabilité de collision est de 0,6 pour 65536 tirages alors qu'avec un compteur sur 32 bits, la collision apparaît au bout de $2^{32}$ écritures du compteur.

Toutefois, l'utilisation d'un compteur pour générer les vecteurs d'initialisation ne permet pas de s'affranchir du besoin de stocker le vecteur d'initialisation dans la mesure où la mémoire est à accès direct (non séquentiel).

Le document EP-A-0 908 810 décrit un procédé de chiffrement exploitant un lecteur d'initialisation prenant en compte l'adresse de stockage d'une donnée dans une mémoire.

La présente invention vise à pallier les inconvénients des méthodes connues de chiffrement de contenu d'une mémoire externe à un processeur au moyen d'une clé propre au processeur ou au circuit intégré.

L'invention vise notamment à proposer une solution compatible avec un chiffrement en continu des données à stocker dans la mémoire.

Pour atteindre ces objets ainsi que d'autres, la présente invention prévoit un procédé de chiffrement par un processeur intégré de données à stocker dans une mémoire, consistant à appliquer un algorithme de chiffrement fonction d'au moins une clé propre au circuit intégré et d'un vecteur d'initialisation, et à mémoriser au moins les données chiffrées, le vecteur d'initialisation dépendant au moins de l'adresse de stockage de la donnée dans la mémoire.

Selon un mode de mise en oeuvre de la présente invention, le vecteur d'initialisation est une fonction prenant en compte l'adresse et une valeur de différenciation.

Selon un mode de mise en oeuvre de la présente invention, le vecteur d'initialisation correspond à la concaténation de l'adresse de stockage et de la valeur de différenciation.

Selon un mode de mise en oeuvre de la présente invention, la valeur de différenciation est fournie par au moins un compteur incrémenté ou décrémenté à chaque écriture dans une même adresse.

Selon un mode de mise en oeuvre de la présente invention, la mémoire est découpée au moins en sections dans lesquelles chaque mot de données est adressable par un indice, l'algorithme de chiffrement prenant en compte à la fois l'adresse de la section et l'indice du mot.

Selon un mode de mise en oeuvre de la présente invention, la mémoire est découpée en régions contenant chacune plusieurs sections, un compteur distinct étant affecté au moins à chaque région de la mémoire.

Selon un mode de mise en oeuvre de la présente invention, un compteur distinct est affecté au moins à chaque section de la mémoire.

Selon un mode de mise en oeuvre de la présente invention, l'algorithme de chiffrement fournit une séquence de chiffrement en continu d'une donnée à écrire dans la mémoire.

L'invention prévoit également un procédé de déchiffrement de données chiffrées, consistant à appliquer un algorithme identique à l'algorithme de chiffrement, un vecteur d'initialisation étant obtenu à partir d'au moins l'adresse de la donnée chiffrée.

L'invention prévoit également un ensemble électronique, par exemple une carte à puce, comprenant au moins une mémoire externe à un circuit intégré pourvu d'un processeur, comprenant des moyens pour chiffrer des données à écrire dans la mémoire, une valeur de différenciation étant stockée avec chaque mot chiffré dans la mémoire.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

les figures 1 et 2 qui ont été décrites précédemment sont destinées à exposer l'état de la technique et le problème posé ; et
la figure 3 illustre un mode de mise en oeuvre de la présente invention.

Les mêmes éléments ont été désignés par les mêmes références aux différentes figures. Pour des raisons de clarté, seuls les éléments et étapes qui sont utiles à la compréhension de l'invention ont été représentés aux figures et seront décrits par la suite. En particulier, l'algorithme de chiffrement à partir de la clé interne au circuit n'a pas été détaillé, l'invention étant compatible avec n'importe quel algorithme classique (par exemple, algorithme à base de registre à décalage à rétroaction linéaire - LSFR, algorithme AES et DES en mode rebouclé - OFB, algorithme SHA-1 avec clé).

Une caractéristique de la présente invention est de rendre le vecteur d'initialisation servant au chiffrement dépendant de l'adresse dans lequel un mot de données doit être stocké dans la mémoire. Ainsi, on simplifie le stockage de ce vecteur d'initialisation, l'adresse du mot de données dans la mémoire étant connue.

De préférence, le vecteur d'initialisation ne correspond pas exactement à l'adresse de chaque mot de données dans la mémoire mais la mémoire est divisée en sections comprenant chacune plusieurs mots ou blocs. Chaque section possède alors une adresse A et chaque position de mot dans une section a un indice I. Connaissant l'adresse et l'indice, il est possible de localiser le bloc de données (le mot) dans la mémoire.

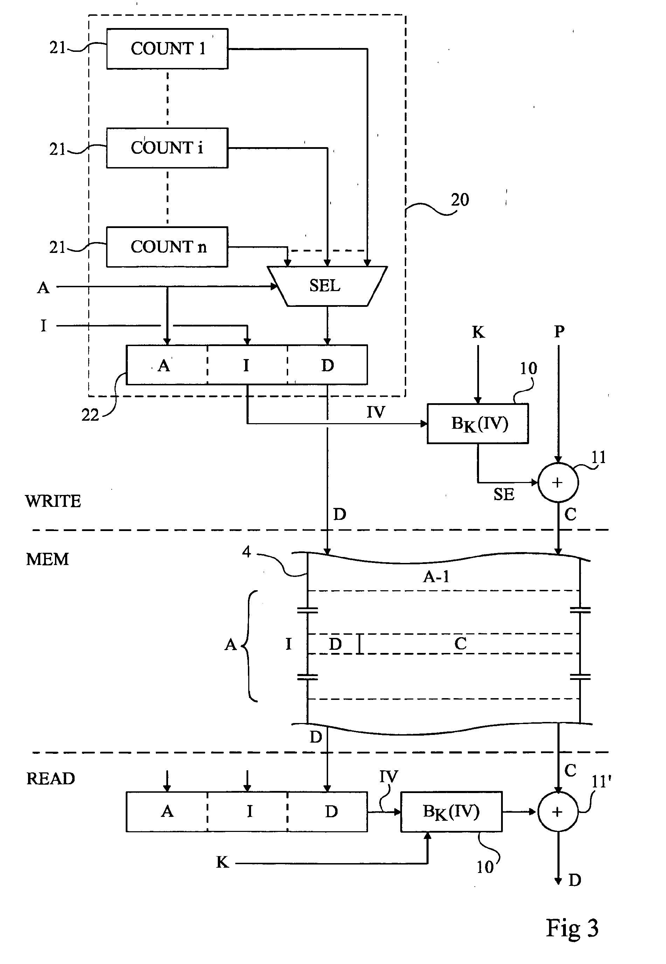

La figure 3 illustre, de façon très schématique, un mode de mise en oeuvre du procédé selon l'invention. Cette figure représente, sous forme de blocs, les éléments ou fonctions du circuit de chiffrement d'un processeur intégré et est à rapprocher de la représentation de la figure 2. La mise en oeuvre pratique de ce circuit de chiffrement peut correspondre indifféremment à une réalisation matérielle (logique câblée) ou à une réalisation logicielle (programme exécuté par le processeur intégré).

Comme précédemment, un bloc 10 de chiffrement, par exemple par blocs ($B_K(IV)$), génère une séquence SE de chiffrement en continu d'un mot de données P à chiffrer. La séquence SE est combinée aux données P au moyen d'une porte 11 de type OU-Exclusif. Le bloc 10 peut comprendre n'importe quelle fonction classique SEGEN de génération de la séquence SE, une fonction $B_K(IV)$ de chiffrement par bloc constituant un exemple.

La porte 11 fournit un résultat chiffré C, c'est-à-dire un mot P chiffré au moyen de la séquence SE. La séquence SE fournie par le générateur 10 est basée sur une clé interne K correspondant à une clé propre au microprocesseur et sur un vecteur d'initialisation IV fourni par un générateur 20. Les grandeurs K et IV sont exploitées, par exemple, par un algorithme symétrique de chiffrement par bloc, par exemple de type DES ou AES et sont des mots binaires dont les tailles dépendent de la sécurité souhaitée. La séquence SE est un mot binaire dont la taille dépend de la taille des mots P à chiffrer.

Selon l'invention le vecteur d'initialisation IV est obtenu par application d'une fonction à plusieurs valeurs binaires comprenant au moins une valeur fonction de l'adresse A où la donnée C doit être écrite dans la mémoire et au moins une valeur D de différenciation ayant pour caractéristique d'être différente à chaque écriture à la même adresse. De préférence, la valeur D est fournie par un compteur 21 incrémenté à chaque écriture. En variante, la valeur D est fournie par un générateur aléatoire.

De préférence, la fonction appliquée est une simple concaténation des valeurs. Le résultat est alors dans un registre 22 qui contient le vecteur d'initialisation IV pour l'adresse concernée. L'ordre de la concaténation n'a toutefois pas d'importance.

Dans le mode de réalisation illustré par la figure 3, plusieurs (n) compteur 21 (COUNT1, ..., COUNTi, ..., COUNTn) sont utilisés, chaque compteur étant affecté à une adresse A. Ici, les adresses A sont, par exemple, des adresses de sections de la mémoire 4 contenant chacune plusieurs mots localisables par un index I. Le compteur fournissant la valeur de différenciation D est alors sélectionné (sélecteur 23 - SEL) en fonction de l'adresse de section A. En variante, le compteur est incrémenté seulement si l'adresse de la section de la mémoire écrite est inférieur ou égale à l'adresse de la section précédemment écrite.

Dans un mode de réalisation simplifié, l'adresse A de la section représente les bits les plus significatifs (MSB) de l'adresse complète et l'index I représente les bits les moins significatifs (LSB) de l'adresse complète. En variante, n'importe quelle fonction de combinaison peut être utilisée.

Le flux de mots C est stocké dans la mémoire 4 (MEM). Selon l'invention, seule la valeur de différentiation D est stockée dans la mémoire 4 en même temps que le mot C issu de la porte 11. Par conséquent, l'encombrement en mémoire lié au stockage de valeurs permettant d'associer, à chaque bloc stocké, un vecteur d'initialisation qui lui est propre est considérablement réduit.

Ce qui a été décrit ci-dessus correspond à une phase d'écriture (partie haute de la figure 3, WRITE) dans la mémoire 4 (MEM).

Pour déchiffrer (partie basse de la figure 3, READ) des données C lues dans la mémoire 4, on fait appel à un bloc 10 ($B_K(IV)$) réalisant la même fonction que le bloc 10 utilisé en chiffrement. Le bloc 10 de déchiffrement reçoit d'une part la clé K interne au circuit intégré (processeur) et d'autre part le vecteur d'initialisation IV reconstitué par concaténation de l'adresse A, de l'index I connu par le processeur, et de la valeur D lue dans la mémoire 4 avec la donnée C.

Il est à noter que, comme dans le cas classique de la figure 2, la fonction de chiffrement et son inverse sont souvent les mêmes (notamment pour le cas du OU-Exclusif).

Le chiffrement revient à appliquer, à chaque mot (bloc) de données P, la formule suivante :

$$C = P + B_K(D \mathbin{/} A \mathbin{/} I),$$

où le symbole + désigne une addition bit à bit (OU-Exclusif bit à bit) tandis que le symbole / désigne une concaténation des mots (ici, une concaténation des mots D, A et I , au lieu de A, I et D en figure 3). En variante, le bloc 10 est un générateur pseudo-aléatoire ayant pour graines la valeur IV et la clé K.

Lors du déchiffrement, la donnée d'origine est obtenue en appliquant la relation suivante :

$$P = C + B_K(D \ / \ A \ / \ I).$$

Un avantage de l'invention est que seule la valeur du compteur D (ou du générateur aléatoire) a besoin d'être écrite dans la mémoire avec la donnée chiffrée C. Par contre, à la différence d'un fonctionnement en mode compteur classique, la valeur du compteur est ici combinée à l'adresse de stockage dans la mémoire, ce qui réduit les risques de collisions pour une même taille de compteur.

On voit qu'il importe peu que plusieurs compteurs aient les mêmes valeurs dans la mesure où le vecteur d'initialisation complet sera différencié par l'adresse.

Un autre avantage de l'invention est, selon son mode de réalisation préféré dans lequel l'adresse A est une adresse de section au lieu d'être une adresse de mot, que l'on améliore encore le chiffrement, sans qu'il soit nécessaire d'occuper plus de place en mémoire.

Selon une variante de réalisation, on peut encore adjoindre une ou plusieurs subdivisions supplémentaires dans la mémoire. Par exemple, on affecte un code de région R à des sous-ensembles de la mémoire regroupant plusieurs sections localisables par leur adresse A. Dans ce cas la fonction de chiffrement complète devient, par exemple :

$$C = P + B_K(D \ / \ R \ / \ A \ / \ I).$$

Une telle réalisation permet d'utiliser un compteur par région, commun à toutes les sections de la région. Le nombre de compteur est ainsi réduit par rapport au mode de réalisation prévoyant un compteur par section.

De préférence, la nature des compteurs et notamment de l'élément stockant leur valeur dans la zone sécurisée est la même que la nature de la mémoire externe dans laquelle sont stockés les différenciateurs D. Par exemple, si la mémoire externe est une mémoire non volatile, au moins la clé, et de préférence les valeurs de compteurs, sont stockées dans la zone sécurisée dans des éléments de mémoire non volatile. Si la mémoire externe est une mémoire volatile (RAM, par exemple), les compteurs et la clé peuvent être stockés dans des registres volatiles de la zone sécurisée.

Selon une autre variante de réalisation, on affecte un compteur à chaque région, en plus du compteur affecté à chaque section.

Selon une autre variante, chaque compteur de section et/ou de région est combiné avec une valeur fournie par un compteur général.

Toutes les variantes ci-dessus ont pour objet de diminuer encore les risques de collisions au prix de légères modifications du circuit et d'une légère complexité des calculs.

Il est à noter que l'invention est compatible avec toute méthode classique de fourniture d'une clé à un processeur intégré, l'invention ne participant pas à la génération de cette clé mais se contentant de l'exploiter pour chiffrer les données à stocker en mémoire externe. En particulier, plusieurs clés peuvent être utilisées au sein d'un même circuit et être choisies, par exemple, en fonction de l'application ou de l'utilisateur. De même, la ou les clés peuvent être fournies au circuit intégré par toute méthode classique (système à clé publique, inscription à la fabrication, génération aléatoire à la mise sous tension, etc.).

Des exemples d'algorithmes de chiffrement pouvant être utilisés pour la mise en oeuvre de l'invention sont décrits dans les publications suivantes, leur adaptation éventuelle étant à la portée de l'homme du métier à partir des indications fonctionnelles données ci-dessus :

- FIPS PUB 46-3, Data Encryption Standard (DES), 1999 ;
- FIPS PUB 180-1, Secure Hash Standard, 1995 ; et
- FIPS PUB 197, Advanced Encryption Standard (AES), 2001.

Bien entendu, la présente invention est susceptible de diverses variantes et modifications qui apparaîtront à l'homme de l'art. En particulier, la réalisation pratique de l'invention par une mise en oeuvre matérielle ou logicielle est à la portée de l'homme du métier à partir des indications fonctionnelles données ci-dessus. De plus, d'autres algorithmes de chiffrement que ceux indiqués dans la présente description à titre d'exemple pourront être utilisés. En outre, le choix des tailles des compteurs est à la portée de l'homme du métier en fonction de la probabilité de collision souhaitée.

## Revendications

**1.** Procédé de chiffrement par un processeur intégré (2) de données à stocker dans une mémoire (4), consistant à appliquer un algorithme (B) de chiffrement fonction d'au moins une clé (K) propre au circuit intégré (1) et d'un vecteur d'initialisation (IV) fonction d'une adresse le vecteur d'initialisation (IV) de stockage de la donnée dans la mémoire, et à mémoriser au moins les données chiffrées, **caractérisé en ce que** le vecteur d'initialisation (IV) est une fonction d'une valeur de différenciation (D), la mémoire (4) étant découpée au moins en sections dans lesquelles chaque mot de données est adressable par un indice (I), et le vecteur d'initialisation (IV) prenant en compte à la fois l'adresse (A) de la section et l'indice du mot.

2. Procédé selon la revendication 1, dans lequel le vecteur d'initialisation (IV) correspond à la concaténation de l'adresse de stockage (A, I) et de la valeur de différenciation (D).

3. Procédé selon la revendication 1 ou 2, dans lequel la valeur de différenciation (D) est fournie par au moins un compteur (21), incrémenté ou décrémenté à chaque écriture dans une même adresse (A, I).

4. Procédé selon la revendication 3, dans lequel la mémoire (4) est découpée en régions contenant chacune plusieurs sections, un compteur distinct étant affecté au moins à chaque région (R) de la mémoire.

5. Procédé selon la revendication 3, dans lequel un compteur distinct (21) est affecté au moins à chaque section (A) de la mémoire (4) .

6. Procédé selon l'une quelconque des revendications 1 à 5, dans lequel l'algorithme de chiffrement (B) fournit une séquence (SE) de chiffrement en continu d'une donnée (P) à écrire dans la mémoire (4).

7. Procédé de déchiffrement de données chiffrées par la mise en oeuvre du procédé selon l'une quelconque des revendications 1 à 6, **caractérisé en ce qu'**il consiste à appliquer un algorithme identique à l'algorithme de chiffrement (B), un vecteur d'initialisation (IV) étant obtenu à partir d'au moins l'adresse (A, I) de la donnée chiffrée et d'une valeur de différenciation.

8. Ensemble électronique comprenant au moins une mémoire (4) externe à un circuit intégré (1) pourvu d'un processeur (2), **caractérisé en ce qu'**il comprend des moyens pour chiffrer des données à écrire dans la mémoire par la mise en oeuvre du procédé selon l'une quelconque des revendications 1 à 6, une valeur de différenciation (D) étant stockée avec chaque mot chiffré (C) dans la mémoire (4).

9. Carte à puce, **caractérisé en ce qu'**elle comprend un ensemble selon la revendication 8.

**Claims**

1. A method of ciphering by an integrated processor (2) of data to be stored in a memory (4), consisting of applying a ciphering algorithm (B) which is a function of at least one key (K) specific to the integrated circuit (1) and of an initialization vector (IV), which is a function of a storage address of the data in the memory and of memorizing at least the ciphered data, **characterized in that** the initialization vector (IV) is a function of a differentiation value (D), the memory (4) being divided at least into sections in which each data word is addressable by an index (I), the initialization vector (IV) taking into account both the section address (A) and the word index.

2. The method of claim 1, wherein the initialization vector (IV) corresponds to the concatenation of the storage address (A, I) and of the differentiation value (D).

3. The method of claim 1 or 2, wherein the differentiation value (D) is provided by at least one counter (21) incremented or decremented on each writing at a same address (A, I).

4. The method of claim 3, wherein the memory (4) is divided into regions, each containing several sections, a separate counter being assigned at least to each region (R) of the memory.

5. The method of claim 3, wherein a separate counter (21) is assigned at least to each section (A) of the memory (4).

6. The method of any of claims 1 to 5, wherein the ciphering algorithm (B) provides a sequence (SE) of stream ciphering of data (P) to be written into the memory (4).

7. A method for deciphering data ciphered by implementation of the method of any of claims 1 to 6, **characterized in that** it consists of applying an algorithm identical to the ciphering algorithm (B), an initialization vector (IV) being obtained based on at least the address (A, I) of the ciphered data and a differentiation value.

8. An electronic assembly comprising at least one memory (4) external to an integrated circuit (1) provided with a processor (2), **characterized in that** it comprises means for ciphering data to be written into the memory by implementation of the method of any of claims 1 to 6, a differentiation value (D) being stored with each ciphered word (C) in the memory (4).

9. A smart card, **characterized in that** it comprises the assembly of claim 8.

**Patentansprüche**

1. Ein Verfahren zum Chiffrieren, durch einen integrierten Prozessor (2), von Daten, die in einem Speicher (4) zu speichern sind, bestehend aus Anwenden eines Chiffrier-Algorithmus (B), welcher einer Funktion von wenigstens einem Schlüssel (K), der spezifisch für den integrierten Schaltkreis (1) ist, und von einem Initialisierungsvektor (IV) ist, welcher eine Funktion von einer Speicheradresse von den Daten in dem Speicher ist, und von Speichern von wenigstens der chiffrierten Daten, **dadurch gekennzeichnet, dass** der Initialisierungsvektor (IV) eine Funktion von einem Differenzierungswert (D) ist, der Speicher (4) wenigstens in Sektionen dividiert bzw. unterteilt ist, in denen jedes Datenwort durch einen Index (I) adressierbar ist, wobei der Initialisierungsvektor (IV) sowohl die Sektionsadresse (A) als auch den Wortindex berücksichtigt.

2.  Verfahren nach Anspruch 1, wobei der Initialisierungsvektor (IV) der Konkatenation bzw. Verknüpfung von der Speicheradresse (A, I) und von dem Differenzierungswert (D) entspricht.

3.  Verfahren nach Anspruch 1 oder 2, wobei der Differenzierungswert (D) vorgesehen ist, durch wenigstens einen Zähler (21) der bei jedem Schreiben auf eine gleiche Adresse (A, I) erhöht oder vermindert wird.

4.  Verfahren nach Anspruch 3, wobei der Speicher (4) in Regionen dividiert bzw. unterteilt ist, die jeweils mehrere Sektionen beinhalten, wobei ein separater Zähler wenigstens an jede Region (R) von dem Speicher zugewiesen ist.

5.  Verfahren nach Anspruch 3, wobei ein separater Zähler (21) wenigstens jeder Sektion (A) von dem Speicher (4) zugewiesen ist.

6.  Verfahren nach irgendeinem der Ansprüche 1 bis 5, wobei der Chiffrier-Algorithmus (B) eine Sequenz (SE) von Stromchiffrierung von Daten (P) vorsieht, die in den Speicher (4) zu schreiben sind.

7.  Ein Verfahren zum Dechiffrieren bzw. Entschlüsseln von Daten die durch eine Implementierung von dem Verfahren nach irgendeinem der Ansprüche 1 bis 6 chiffriert worden sind, **dadurch gekennzeichnet, dass** es besteht aus Anwenden eines Algorithmus der identisch zu dem Chiffrier-Algorithmus (B) ist, wobei ein Initialisierungsvektor (IV) erlangt wird, basierend auf wenigstens der Adresse (A, I) von den chiffrierten Daten und einem Differenzierungswert.

8.  Eine elektronische Anordnung, die wenigstens einen Speicher (4) aufweist, der extern von einer integrierten Schaltung (1) ist, die mit einem Prozessor (2) versehen ist, **gekennzeichnet dadurch, dass** sie Mittel aufweist zum Chiffrieren von Daten die in den Speicher zu schreiben sind, und zwar durch Implementierung von dem Verfahren nach irgendeinem der Ansprüche 1 bis 6, wobei ein Differenzierungswert (D) mit jedem chiffrierten Wort (C) in dem Speicher (4) gespeichert wird.

9.  Eine Chip-Karte bzw. Smart-Karte, **gekennzeichnet dadurch dass** sie die Anordnung nach Anspruch 8 aufweist.

Fig 1

Fig 2

Fig 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20030198344 A
- EP 0908810 A